# EUROPEAN PATENT SPECIFICATION

(11) **EP 0 625 393 B1**
(45) Date of publication and mention of the grant of the patent: **14.08.2002**
(21) Application number: 94107479.1
(22) Date of filing: 13.05.1994
(51) Int. Cl.: B23B 31/26, B27C 5/10

(54) **Router with quick tool replacement**
Oberfräse mit schnellem Werkzeugwechsel
Fraiseuse avec changement rapide d'outil

(30) Priority: 19.05.1993 IT BO930117 U
(43) Date of publication of application: 23.11.1994
(73) Proprietor: SCM GROUP S.p.A., 47037 Rimini (IT)
(72) Inventor: Gemmani, Giuseppe, I-47037 Rimini, Forl (IT)
(74) Representative: Modiano, Guido, Dr.-Ing.

(56) References cited:
- EP-A- 0 258 989
- EP-A- 0 267 156
- WO-A-81/02401
- US-A- 3 587 387

## Description

The present invention relates to a router for carpentry with quick tool replacement as per the preamble of claim 1. An example of such a router is disclosed in WO 81/02401A.

In carpentry, particularly for the beadwork of panels, wooden tiles and the like, vertical milling machines (hereinafter simply termed "routers" for convenience in description) are known to include a milling tool coupled to the top of a vertical shaft that protrudes above a working surface on which the part to be machined is moved.

In conventional routers, every time a new profile must be formed it is necessary to replace the old milling tool with a new one. This leads to the need to use tools having holes of the same diameter so that they can be fitted on the same shaft, and this sets limits to the structure of the tool.

In other kinds of routers the tool is mounted on a replaceable shaft in order to obviate this drawback. Nonetheless, it is still necessary to remove the tool before accessing the shaft. Furthermore, it has been found that the means for fixing the shaft are difficult or at least awkward to access.

The technical aim of the present invention is to provide a router that allows to overcome the shortcomings of those currently commercially available and in particular allows rapid tool mounting and removal operations and the use of tools having different internal diameters.

This aim is achieved with a router for carpentry as in claim 1.

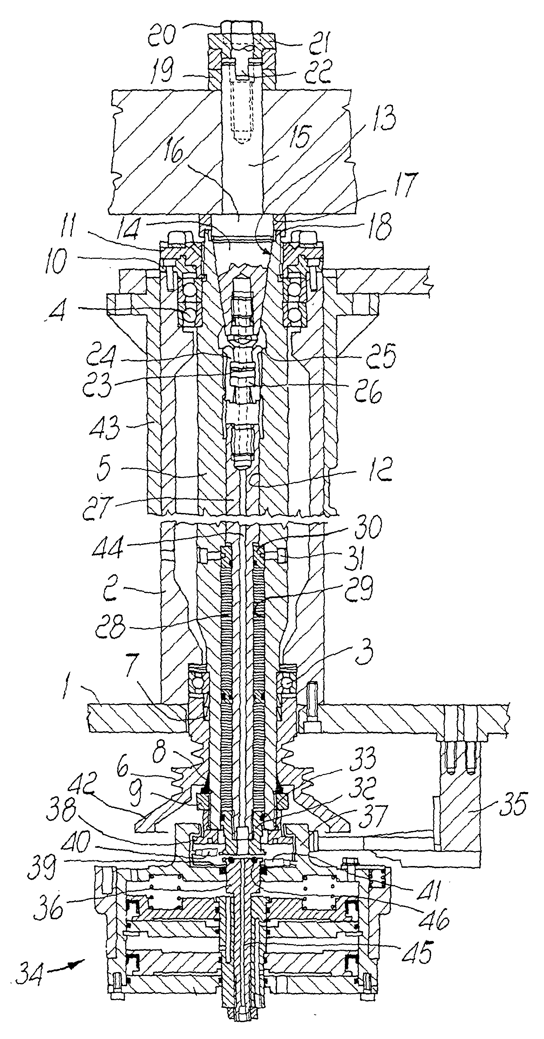

Further characteristics and advantages of the router according to the present invention will become apparent from the following detailed description of a preferred embodiment, illustrated only by way of non-limitative example in the accompanying drawing, wherein:
the only figure is a vertical sectional view of a router according to the new inventive concept.

With reference to the above figure, the router comprises a plate 1 on which a tubular post 2 is fixed; said post rises vertically and a hollow shaft 5 is rotatably supported inside it by means of bearings 3 and 4.

A pulley 6 is keyed on the portion of the hollow shaft 5 that lies below the plate 1 and is driven, by means of a belt which is not shown, by an electric motor mounted onto said plate.

The pulley 6 is rigidly coupled to the hollow shaft 5 by means of rings 7 and 8 having a wedge-like cross-section and forced between the pulley and the hollow shaft by means of a ring 9.

The upper bearing 4 is protected by a labyrinth seal formed by a first ring 10 which is fixed to the top of the post 2 and by a second ring 11 which is fixed to the top of the hollow shaft 5; the oppositely arranged surfaces of said rings 10 and 11 have concentric ridges and grooves that mutually interpenetrate.

The hollow shaft 5 is axially crossed by a cylindrical cavity 12 which widens at its upper end so as to form a conical seat 13 that is flared upwardly.

The complementarily tapered tang 14 of a tool supporting shaft 15 is adapted to engage the conical seat 13. The tang 14 is separated from the shaft 15 by a collar 16 having two diametrical notches 17 in which two respective tabs 18, extending axially from the top of the hollow shaft 5, engage to provide a rotational actuation coupling. According to a known method which accordingly is not described in detail, the tool is placed on the shaft 15 with the aid of spacer rings 19 and locked against the collar 16 by a bolt 20 which is axially screwed into the shaft 15 with the interposition of a washer 21 which, by means of teeth 22, provides a rotary coupling with the shaft 15, preventing the loosening of the bolt 20 when the shaft 15 stops and starts.

A coaxial mushroom-like stem 23 is screwed to the lower end of the tang 14, and a collet-like element 24 of the type that expands cylindrically cooperates with said stem.

The collet 24 is substantially constituted by sectors that oscillate on radial planes and the upper ends whereof are curved outwardly to engage an abutment constituted by an annular step 25 which is obtained from an expansion in the region of transition between the conical seat 13 and the cylindrical cavity 12 of the hollow shaft 5.

The sectors of the collet furthermore have internal undercuts for the engagement of the head of the stem 23 and of a pin 26 which is fixed to the top of a stay bolt 27 which is guided in the cylindrical cavity 12.

From the foregoing it is evident that when the stay bolt 27 is actuated downward, the collet 24, by abutting against the abutment 25, closes and engages the stem 23, thus forcing the tang 14 into the seat 13.

The traction force applied by the stay bolt 27 is provided by a pack of springs 28 accommodated in a chamber 29 formed between the rod 27 and the hollow shaft 5 and more precisely by providing a reduction in the outer diameter of the bolt 27 and an expansion of the cylindrical cavity 12. The pack of springs 28 rests at the top against a ring 30 which is retained by radial screws 31 and at the bottom against a bush 32 which is screwed to the lower end of the bolt 27 and is centered on the hollow shaft 5 with the interposition of a sealing ring 33.

A jack 34, fixed to the plate 1 by a support 35, is provided to actuate the stay bolt 27 in the direction that allows the collet 24 to open and thus allows to remove the tool supporting shaft 15.

The jack 34 has the stem 36 coaxial to the hollow shaft 5 and comprises a collar 37 that forms, together with a flanged ring 38 fixed to the shaft 5 below the pulley 6, a chamber 39 which accommodates two sensors 40 and 41 for detecting the axial position of the bolt 27 and of the stem 36. A third sensor, not shown in the drawing, cooperates with the ring 38 to detect the rotation of the shaft 5. The coupling between the flanged ring 38 and the collar 37 is protected by a bell-shaped expansion 42 of the pulley 6.

The described router is completed by a sleeve 43 which is supported in the base of the machine so as to allow to tilt the post 2 with respect to the vertical. The post 2 can furthermore be arranged along the sleeve 43 to determine the arrangement of the tool with respect to the working surface.

As can be deduced from the above description, the fundamental prerogative of the machine according to the present invention resides in that a quick and safe system for tool replacement has been provided. Indeed, starting from the position in which the tool is mounted, as shown in the figure, by actuating the jack 34, by means of the stem 36 that acts against the stay bolt 27, first the collet 24 opens and then, as the stroke of the stay bolt 27 continues, the pin 26 abuts against the stem 23 and the tang 14 is expelled from the seat 13.

Then, after inserting the tang of a new shaft with a new tool in the seat 13, by releasing the jack 34 the pack of springs 28 pulls the stay bolt 27 downward so that the collet 24, by abutting against the abutment 25, closes on the head of the stem 23 and retains the tang in the seat 13.

According to a particularity of the invention, the stay bolt 27 and the stem 36 are axially crossed by respective channels 44 and 45 which are mutually connected by lifting the stem 36. A gasket 46 is conveniently arranged around the outlet of the channel 44 and forms a front seal between the opposite ends of the bolt 27 and of the stem 36.

The channel 44 ends upward at the collet 24, and the channel 45, during tool replacement, is connected to a source of compressed air, so that when the stem 36 acts on the bolt 27 to expel the tang 14 from the seat 13, the compressed air supplied through the channels 44 and 45 keeps the conical coupling region clean, preventing the penetration of particles (shavings or dust) that might compromise the precision of this coupling. At the same time, the external venting of the air can be used to indicate the tool replacement step.

The arrangement of the sensors 40 and 41 has proved itself advantageous. In particular, a mismatch between the sensor 40 and the bush 32 indicates the imperfect penetration of the tang 14 in the seat 13, whereas the sensor 41 stops the machine if the stem 36 is in raised position.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A router for carpentry comprising: a tubular post (2) being supported on a base (1); a hollow shaft (5) which is rotatably supported in said tubular post (2) and is connected to rotational actuation elements, said hollow shaft (5) having, at an end thereof, a conical seat (13) for the coupling of the tapered tang (14) of a tool supporting shaft (15); means (23, 24, 27) for retaining said tang (14) in said seat (13); means (16,17,18) for providing the rotary coupling between said hollow shaft (5) and said tool supporting shaft (15); means (34) for releasing said tang (14) from said seat (13) to allow the removal of said tool supporting shaft (15); and a pin (26), fixed to an end of a stay bolt (27) which is guided in a cylindrical seat cavity (12) crossing said hollow shaft (5), adapted to abut on the free end of said tang (14) for its expulsion from said seat (13) following the release of the tang from said tang retaining means (23, 24, 27), **characterized in that** the tubular post (2) is vertical, whereby the hollow shaft (5) is connected to the rotational actuation elements at the lower end thereof and has the conical seat (13) at its top end and the pin (26) is fixed to the top end of the stay bolt (27), **and in that** it further comprises air supply channels (44, 45), which axially cross said stay bolt (27) and a stem (36) movable to abut on said stay bolt (27), said air channels (44, 45) being mutually connected by lifting the stem (36) for supplying compressed air at the conical seat (13), during expulsion of said tang (14), for external venting of the air which is indicative that a tool changing operation is in course, and so as to keep clean said seat (13), and Two sensors (40, 41) provided to detect the axial position of said stay bolt (27) and said stem (36) respectively whereby to indicate imperfect penetration of a newly inserted tool tang (14) in said seat (13).

2. Router according to claim 1, **characterized in that** said means for retaining said tang in said seat comprises the stay bolt (27) which is slidingly accommodated in said hollow shaft (5) and is provided, at one end, with a collet (24), elastic traction means (28) being provided which move said bolt (27) from a position in which said collet is open, in order to receive a stem (23) of said tang (14), toward a position in which said collet (24) is closed to couple to said stem (23) and said elastic means (28) retain said tang (14) in said seat (13).

3. Router according to claim 2, **characterized in that** said tool expelling means comprises a pin (26) which is fixed at the end of said stay bolt (27) where the collet (24) is provided, and **in that** said collet comprises undercuts for engagement with said pin (26).

4. Router according to claim 2 or 3, **characterized in that** said elastic means are constituted by a pack of springs (28) which are accommodated in a chamber (29) formed between said hollow shaft (5) and said bolt (27) and abut, on one side, against a shoulder (30) of the hollow shaft (5) and, on the other side, against a shoulder (32) of the bolt (27).

5. Router according to claim 2, 3 or 4 **characterized in that** said collet (24) is of the expansion type with sectors that close on the stem (23) of the tang (14) upon abutment against an abutment (25) provided in said hollow shaft (5).

6. Router according to one of the preceding claims, **characterized in that** said means for releasing said tang (14) from said seat (13) include a jack (34) the stem (36) whereof acts axially on said bolt (27).

7. Router according to claim 6, **characterized in that** said sensor means (40) are adapted to detect the position of said bolt (27), and **in that** it comprises further sensors means (41) adapted to detect the axial position of said stem (36) and to put the router into its halted condition during tool replacement.

8. Router according to one or more of the preceding claims, **characterized in that** said stay bolt (27) and said stem (36) are axially crossed by respective channels (44, 45) which are mutually connectable upon lifting of said stem (36), with one of the channels (45) being further connectable, during tool replacement, to a source of compressed air, said channels (44, 45) forming said means for supplying compressed air to said conical seat (13).

9. Method for tool replacement in a router for carpentry according to claim 1, comprising the steps of:
actuating the tool releasing means (34) so as to act on the tang retaining means (23, 24, 27) for releasing the tool tapered tang (14) from the conical seat (13); actuating the tool expelling pin (26) to abut on the free end of said tool tang (14) for the expulsion thereof out of said seat (13), **characterized in that** it further comprises the steps of supplying compressed air at said conical seat (13) during the expulsion step of said tool tang (14) so as to clean the seat; external venting of the compressed air which is indicative that a tool changing operation is in course; and, after insertion of a new tool tang in said seat (13), detecting by way of the sensors (40,41) the axial position of said stay bolt (27) and stem (36).

## Patentansprüche

1. Oberfräse für Zimmererarbeiten umfassend: einen rohrförmigen Ständer (2), der auf einer Basis (1) gehalten ist; einen hohlen Schaft (5), der drehbar in dem rohrförmigen Ständer (2) gelagert und mit Elementen zur Rotationsbetätigung verbunden ist, wobei der hohle Schaft (5) an einem Ende einen kegelförmigen Sitz (13) zur Kopplung des Keilzapfens (14) eines Werkzeughalteschafts (15) hat; Mittel (23, 24, 27) zum Halten des Zapfens (14) in dem Sitz (13); Mittel (16, 17, 18) zum Bereitstellen der Drehkopplung zwischen dem hohlen Schaft (5) und dem Werkzeughalteschaft (15); Mittel (34) zum Lösen des Zapfens (14) aus dem Sitz (13), um das Entfernen des Werkzeughalteschafts (15) zu ermöglichen; und einen Stift (26), der an einem Ende eines Stehbolzens (27) befestigt ist, der in einem zylindrischen, den hohlen Schaft (5) durchsetzenden Aufnahmehohlraum (12) geführt ist, und dazu geeignet ist, an dem freien Ende des Zapfens (14) anzustoßen, um diesen nach dem Lösen des Zapfens aus den Zapfenrückhaltemitteln (23, 24, 27) aus dem Sitz (13) auszustoßen, **dadurch gekennzeichnet, daß** der rohrförmige Ständer (2) vertikal ist, wobei der hohle Schaft (5) an seinem unteren Ende mit den Elementen zur Rotationsbetätigung verbunden ist und an seinem oberen Ende den kegelförmigen Sitz (13) hat, und der Stift (26) am oberen Ende des Stehbolzens (27) befestigt ist, und dadurch, daß sie ferner Luftzufuhrkanäle (44, 45) enthält, die den Stehbolzen (27) und eine Spindel (36) axial durchsetzen, die bewegt werden kann, um an dem Stehbolzen (27) anzustoßen, wobei die Luftkanäle (44, 45) durch Anheben der Spindel (36) miteinander verbunden werden, um an dem kegelförmigen Sitz (13) während des Ausstoßens des Zapfens (14) Druckluft zuzuführen, zur äußeren Entlüftung der Luft als ein Anzeichen dafür, daß gerade ein Werkzeugwechsel durchgeführt wird und um den Sitz (13) sauber zu halten, sowie zwei Sensoren (40, 41), die vorgesehen sind, um die axiale Position des Stehbolzens (27) bzw. der Spindel (36) zu erfassen, wodurch ein unvollständiges Eindringen eines neu eingesetzten Werkzeugzapfens (14) in den Sitz (13) angezeigt wird.

2. Oberfräse nach Anspruch 1, **dadurch gekennzeichnet, daß** die Mittel zum Halten des Zapfens in dem Sitz den Stehbolzen (27) einschließen, der verschiebbar in dem hohlen Schaft (5) aufgenommen und an einem Ende mit einer Spannzange (24) versehen ist, wobei elastische Zugmittel (28) vorgesehen sind, die den Bolzen (27) aus einer Position, in der die Spannzange geöffnet ist, um eine Spindel (23) des Zapfens (14) aufzunehmen, in eine Position bewegen, in der die Spannzange (24) geschlossen ist, um an die Spindel (23) anzukoppeln, und die elastischen Mittel (28) den Zapfen (14) in dem Sitz (13) halten.

3. Oberfräse nach Anspruch 2, **dadurch gekennzeichnet, daß** die Mittel zum Ausstoßen des Werkzeugs einen Stift (26) einschließen, der an dem Ende des Stehbolzens (27) angebracht ist, an dem die Spannzange (24) vorgesehen ist, und daß die Spannzange Kerben zum Eingriff mit dem Stift (26) aufweist.

4. Oberfräse nach Anspruch 2 oder 3, **dadurch gekennzeichnet, daß** die elastischen Mittel aus einem Packen Federn (28) gebildet sind, die in einer zwischen dem hohlen Schaft (5) und dem Bolzen (27) ausgebildeten Kammer (29) untergebracht sind und auf einer Seite an eine Schulter (30) des hohlen Schaftes (5) und auf der anderen Seite an eine Schulter (32) des Bolzens (27) anstoßen.

5. Oberfräse nach Anspruch 2, 3 oder 4, **dadurch gekennzeichnet, daß** die Spannzange (24) eine Spreizspannzange ist, mit Sektoren, die sich bei einem Anstoßen an einem in dem hohlen Schaft (5) vorgesehenen Anschlag (25) an die Spindel (23) des Zapfens (14) anlegen.

6. Oberfräse nach einem der vorhergehenden Ansprüche, **dadurch gekennzeichnet, daß** die Mittel zum Lösen des Zapfens (14) aus dem Sitz (13) eine Hubvorrichtung (34) einschließen, deren Spindel (36) axial auf den Bolzen (27) einwirkt.

7. Oberfräse nach Anspruch 6, **dadurch gekennzeichnet, daß** die Sensormittel (40) dazu geeignet sind, die Position des Bolzens (27) zu erfassen, und daß sie weitere Sensormittel (41) enthält, die dazu geeignet sind, die axiale Position der Spindel (36) zu erfassen und die Oberfräse während des Werkzeugwechsels in ihren Haltezustand zu versetzen.

8. Oberfräse nach einem oder mehreren der vorhergehenden Ansprüche, **dadurch gekennzeichnet, daß** der Stehbolzen (27) und die Spindel (36) von jeweiligen Kanälen (44, 45) axial durchsetzt werden, die beim Anheben der Spindel (36) miteinander verbindbar sind, wobei einer der Kanäle (45) während des Werkzeugwechsels ferner mit einer Druckluftquelle verbunden werden kann, wobei die Kanäle (44, 45) die Mittel zum Zuführen von Druckluft zu dem kegelförmigen Sitz (13) bilden.

9. Verfahren zum Werkzeugwechsel in einer Oberfräse für Zimmererarbeiten nach Anspruch 1, bestehend aus den Schritten:
Betätigen der Werkzeuglösemittel (34), um auf die Zapfenrückhaltemittel (23, 24, 27) zwecks Lösen des Werkzeugkeilzapfens (14) aus dem kegelförmigen Sitz (13) einzuwirken; Betätigen des Werkzeugausstoßstiftes (26) derart, daß er an dem freien Ende des Werkzeugzapfens (14) anstößt um diesen aus dem Sitz (13) auszustoßen, **dadurch gekennzeichnet, daß** es ferner die Schritte umfaßt: Zuführen von Druckluft an dem kegelförmigen Sitz (13) während des Schrittes des Ausstoßens des Werkzeugzapfens (14), um den Sitz zu säubern; äußeres Entlüften der Druckluft als ein Anzeichen dafür, daß gerade ein Werkzeugwechsel durchgeführt wird; und Erfassen der axialen Position des Stehbolzens (27) und der Spindel (36) mittels der Sensoren (40, 41) nach dem Einsetzen eines neuen Werkzeugzapfens in den Sitz (13).

## Revendications

1. Toupie de menuiserie comprenant : une colonne tubulaire (2) supportée par une embase (1) ; un arbre creux (5) qui est supporté rotatif dans ladite colonne tubulaire (2) et est relié à des éléments d'actionnement en rotation, ledit arbre creux (5) ayant, à une de ses extrémités, une portée conique (13) destinée à l'accouplement d'une queue à section décroissante (14) d'un arbre support d'outil (15) ; des moyens (23, 24, 27) destinés à retenir ladite queue (14) dans ladite portée (13) ; des moyens (16, 17, 18) destinés à assurer l'accouplement en rotation entre ledit arbre creux (5) et ledit arbre support d'outil (15) ; des moyens (34) destinés à libérer ladite queue (14) de la dite portée (13) pour permettre de retirer ledit arbre support d'outil (15); et une cheville (26) fixée à une extrémité d'un boulon d'ancrage (27) qui est guidé dans une cavité de portée cylindrique (12) qui traverse ledit arbre creux (5), et adaptée pour buter contre l'extrémité libre de ladite queue (14) pour assurer son expulsion hors de ladite portée (13) après que la queue a été libérée desdits moyens (23, 24, 27) de retenue de la queue, **caractérisée en ce que** ladite colonne tubulaire (2) est verticale, l'arbre creux (5) étant relié aux éléments d'actionnement en rotation à son extrémité inférieure et présentant la portée conique (13) à son extrémité supérieure, et la cheville (26) étant fixée à l'extrémité supérieure du boulon d'ancrage (27) et **en ce qu'**elle comprend en outre des conduits d'alimentation en air (44, 45) qui. traversent axialement ledit boulon d'ancrage (27) et une tige (36) qui peut se déplacer pour buter contre ledit boulon d'ancrage (27), lesdits conduits d'air (44, 45) étant raccordés entre eux par une élévation de la tige (36) pour envoyer de l'air comprimé au niveau de la portée conique (13), pendant l'expulsion de ladite queue (14), pour assurer l'échappement de l'air à l'extérieur qui est indicatif du fait qu'une opération de changement d'outil est en cours et de manière à maintenir la propreté de ladite portée (13), et deux capteurs (40, 41) prévus pour détecter la position axiale dudit boulon d'ancrage (27) et de ladite tige (36) respectivement, de manière à signaler une pénétration imparfaite de la queue d'outil (14) nouvellement insérée dans ladite portée (13).

2. Toupie selon la revendication 1, **caractérisée en ce que** lesdits moyens destinés à retenir ladite queue dans ladite portée comprennent le boulon d'ancrage (27) qui est logé à coulissement dans ledit arbre creux (5) et est muni d'une pince (24) à une extrémité, alors qu'il est prévu des moyens de traction élastiques (28) qui déplacent ledit boulon (27) d'une position dans laquelle ladite pince est ouverte pour recevoir une tige (23) de ladite queue (14), vers une position dans laquelle ladite pince (24) est fermée pour s'accrocher à ladite tige (23) et où lesdits moyens élastiques (28) retiennent ladite queue (14) dans ladite portée (13).

3. Toupie selon la revendication 2, **caractérisée en ce que** ledit moyen d'expulsion de l'outil comprend une cheville (26) qui est fixée à l'extrémité dudit boulon d'ancrage (27) à laquelle la pince (24) est prévue et **en ce que** ladite pince comprend des contre-dépouilles destinées à coopérer avec ladite cheville (26).

4. Toupie selon la revendication 2 ou 3, **caractérisé en ce que** lesdits moyens élastiques sont constitués par un paquet de ressorts (28) qui sont logés dans une chambre (29) formée entre ledit arbre creux (5) et ledit boulon (27) et qui butent, d'un côté, contre un épaulement (30) de l'arbre creux (5) et, de l'autre côté, contre un épaulement (32) du boulon (27).

5. Toupie selon la revendication 2, 3 ou 4, **caractérisée en ce que** ladite pince (24) est du type à expansion, comprenant des secteurs qui se ferment sur la tige (23) de la queue (14) en réponse à la butée contre une butée (25) prévue dans ledit arbre creux (5).

6. Toupie selon une des revendications précédentes, **caractérisée en ce que** lesdits moyens destinés à libérer ladite queue (14) de ladite portée (13) comprennent un vérin (34) dont la tige (36) agit axialement sur ledit boulon (27).

7. Toupie selon la revendication 6, **caractérisée en ce que** lesdits moyens capteurs (40) sont adaptés pour détecter la position dudit boulon (27) et **en ce qu'**elle comprend en outre des moyens capteurs additionnels (41) adaptés pour détecter la position axiale de ladite tige (36) et pour mettre la toupie dans son état arrêté pendant le remplacement de l'outil.

8. Toupie selon une ou plusieurs des revendications précédentes, **caractérisée en ce que** ledit boulon d'ancrage (27) et ladite tige (36) sont traversées axialement par des conduits respectifs (44, 45) qui peuvent être raccordés entre eux en réponse à l'élévation de ladite tige (36), l'un des conduits (45) pouvant être raccordé en outre à une source d'air comprimé pendant le remplacement de l'outil, lesdits conduits (44, 45) formant lesdits moyens destinés à envoyer de l'air comprimé à ladite portée conique (13).

9. Procédé pour le remplacement de l'outil dans une toupie de menuiserie selon la revendication 1, comprenant les étapes consistant à : actionner les moyens de libération de l'outil (34) de manière à agir sur les moyens (23, 24, 27) de retenue de la queue pour libérer la queue à section décroissante (14) de l'outil de la portée conique (13) ; actionner la cheville (26) d'expulsion de l'outil pour qu'elle bute contre l'extrémité libre de ladite queue (14) de l'outil pour expulser cette dernière de ladite portée (13), **caractérisée en ce qu'**il comprend en outre les étapes consistant à envoyer de l'air comprimé vers ladite portée conique (13) pendant l'étape d'expulsion de ladite queue (14) de l'outil de manière à nettoyer la portée ; mettre l'air comprimé à l'échappement à l'extérieur, ce qui est indicatif du fait qu'une opération du changement d'outil est en cours; et, après l'insertion d'une nouvelle queue d'outil dans ladite portée (13), détecter au moyen des capteurs (40, 41) la position axiale dudit boulon d'ancrage (27) et de ladite tige (36).
